(19) Europäisches Patentamt
European Patent Office
Office européen des brevets

(11) EP 0 675 267 B1

(12) EUROPEAN PATENT SPECIFICATION

(45) Date of publication and mention
of the grant of the patent:
**10.06.1998 Bulletin 1998/24**

(51) Int Cl.6: **F01N 3/02**, F01N 9/00

(21) Application number: **95104866.9**

(22) Date of filing: **31.03.1995**

(54) **Exhaust-gas purifier**

Abgasreiniger

Purificateur de gaz d'échappement

(84) Designated Contracting States:
**DE FR GB**

(30) Priority: **01.04.1994 JP 64963/94
27.09.1994 JP 230995/94**

(43) Date of publication of application:
**04.10.1995 Bulletin 1995/40**

(73) Proprietor: **MATSUSHITA ELECTRIC INDUSTRIAL CO., LTD.
Kadoma-shi, Osaka 571 (JP)**

(72) Inventors:
- **Fujiwara, Norihiko
  Yamatotakada-shi, Nara 635 (JP)**
- **Nobue, Tomotaka
  Yamatokoriyama-shi, Nara 639-11 (JP)**
- **Matsumoto, Takahiro
  Ikoma-gun, Nara, 636-01 (JP)**
- **Ogino, Toshiro
  Nara 633 (JP)**
- **Nakajima, Akihiko
  Nara-shi, Nara 631 (JP)**
- **Noguchi, Masao
  Ikoma-gun, Nara 636-01 (JP)**
- **Tao, Muneo
  Yamatokoriyama-shi, Nara, 639-011 (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 506 083**

- **PATENT ABSTRACTS OF JAPAN vol. 18 no. 374 (M-1638) ,14 July 1994 & JP-A-06 101445 (MATSUSHITA) 12 April 1994,**
- **PATENT ABSTRACTS OF JAPAN vol. 10 no. 155 (M-485) [2211] ,4 June 1986 & JP-A-61 011416 (MITSUBISHI) 18 January 1986,**
- **PATENT ABSTRACTS OF JAPAN vol. 17 no. 117 (M-1378) ,11 March 1993 & JP-A-04 301125 (MATSUSHITA) 23 October 1992,**

## Description

## BACKGROUND OF THE INVENTION

Field of the Invention

This invention relates to exhaust gas purifiers according the preambles of claims 1 and 3.

## Description of the Prior Arts

Such exhaust gas purifiers according to the preambles of claims 1 and 3 are known from EP-A-0 506 083.

Whereas three kinds of particulate-matter, i.e., soluble organic fraction (SOF), soot, and sulfur compounds are contained in the gas exhausted from internal-combustion engine particularly from diesel engine, various practical methods purifying the particulate-matter contained in exhaust system have been studied extensively, and this includes a catalytic combustion method by which SOF is oxidized and burnt, and a method by which particulate matter is burnt after this is collected by a filter. However, the method using a filter is considered advantageous since the removal of soot contained in exhaust gas by the oxidization and combustion method is found nearly impossible.

However, employing the filter method, clogging of filter by particulate-matter caught therein, impeding of exhaust-gas by clogged filter, or stagnation of engine could take place after continuous use of filter.

In order to solve these problems. various methods regenerating the filter performance have been experimented, but the development of durable filter has to be carried out first.

The possible methods regenerating the filter performance include a proposed and experimented method by which the particulate matter collected on filter are burnt, and a method by which the particulate-matter is blown out of the filter by using highpressure air and is burnt, and others.

However, since the method by which the particulate-matter is burnt outside of filter had been chronically troubled by the incomplete removal of particulate matter from filter, a method by which the collected particulate-matter is burnt on the filter surface are employed more often at present.

The combustion of particulate-matter is began at a temperature of about 600 °C when heat is applied thereon, so that the temperature within the filter burning the particulate matter may come up to high. Since the highest temperature of the filter made of a ceramic material is limited, the filter would be melted, damaged or cracked by the internal-stress produced by the difference in thermal expansion coefficients when the filter temperature became more than its highest limit.

In order to protect the filter against the possible mechanical damage due to the operation of exhaust-gas purifier and to extend the life of filter collecting the particulate-matter, the maximum amount of collectable particulate-matter allowing the filter-regeneration at an optimum condition should be determined first, and the amount of collected particulate-matter have to be determined precisely, and then, the regeneration of filter by applying heat should be carried out by an optimum method, and this should be determined on the predetermined weight of particulate matter, considering various peripheral conditions at the time of filter-regeneration at the same time.

The weight of particulate-matter can be derived from a pressure difference produced between the input and the output of filter, or from microwave characteristics determined by the amount of particulate-matter collected by the filter. Since the former method utilizing the pressure difference governed by the flow and the temperature of exhaust gas, the detected signal of pressure have to be corrected accordingly. However, the accurate weight of collected particulate-matter can hardly be determined even with the frequent applications of corrections because the variations of exhaust-gas temperature are large due to the frequent and wide variations of engine revolutions.

On the other hand, the later method utilizing the microwave characteristics is considered advantageous since the amount of collected particulate-matter can be determined independent of the variations of exhaust-gas flow. The inventors of the present invention had previously proposed a method determining the weight of particulate-matter using microwave (Japanese Patent Application, H 5-7291 corresponding to Japanese Patent Laid-open No. Hei 6-212946). Since the proposed method utilizing the electromagnetic-wave (microwave) is a method by which the means to determine the weight of collected particulate-matter is protected against exhaust-gas, longer operating life of the weight measuring means can be obtained.

However, even when this measuring method is employed, the accurate determination of the weight of collected particulate-matter at every operating conditions of internal-combustion engine is highly difficult, and this is due to the method by which the weight determination of particulate-matter collected by the filter depends only on the detected microwave-signal. The problems in this case are now explained first in below.

In general, it has been known well that the composition of exhaust-gas outputted from internal-combustion engine depends largely on the load-condition of engine, that is, increases of the weight ratio of soot against particulate-matter as the increase of engine load, is essential.

Considering the operating-condition of engine installed in city bus or garbage collector as a practical engine condition, no heavy load is applied continuously on the engine under the conditions of such. Therefore, the particulate-matter collected by the filter of such engine should contain SOF, soot, and sulphur compounds of easily determinable amounts.

Though the ratio of exhaust-gas composition is governed largely by the engine operating condition, this is within a reasonably possible range so that the filter can be regenerated by the proposed method.

On the other hand, in a case where a heavy load is continuously applied on engine, such as a case of continuous operation of construction machine or a case of grade-climbing automobile, the most of particulate-matter exhausted from internal-combustion engine would be occupied by soot. Since the so-called "dry soot" exhausted in these cases are of light in weight and large in volume, the distribution of particulate-matter penetrated in the filter and the distribution of collected particulate-matter would be different largely from those of the before-shown case.

Furthermore, the microwave-absorption coefficient of soot is extremely higher than those of SOF and sulphur compounds. Thus, from the integrated characteristics of dry-soot and microwave, large errors is inevitable when the filter regeneration is conducted only on the microwave-signal obtained by the measurement of volume of collected particulate-matter.

This means a possiblely high decision-error produced by a detection-signal showing a considerably heavy weight of particulate matter despite the small volume of collected particulate matter, and this may lead to an inadequate filter heating at filter-regeneration leaving a fair amount of combustion residue behind.

## SUMMARY OF THE INVENTION

Therefore, the objectve of the present invention is to carry out the precise determination of particulate-matter weight independent of variations of operating conditions of internal-combustion engine, to determine the timing of filter regeneration based on the result of weight determination, and to offer an exaust-gas purifier of which filter perfomannce is maintainable for a long period.

This object is solved by exhaust gas purifiers according claims 1 and 3.

Thus, according to claim 1 the invented exaust-gas purifier accomplishing the above-shown objectives should be equipped with a filter collecting the particulate-matter contained in the exhaust-gas of internal-combustion engine, an electromagnetic-wave supplying means supplying electromagnetic-wave into a space in which the filter is housed, an electromagnetic-wave detecting means cuopled to the electromagnetic-wave produced in the space in which the filter is housed detecting the intensity of electromagnetic-wave, a means to estimate the weight of particulate-matter collected by the filter from the signal obtained by the electromagnetic-wave detecting means, an engine operation detecting means, and a regeneration means removing the particulate-matter collected on the filter operated by the signal outputted from the means to estimate the weight of particulate-matter: wherein the means to estimate the weight of collected particulate- matter is provided with a means to memorize physical factors in which the physical factors related to the operation of the internal-combustion engine and the electromagnetic-wave intensity within the space housing the filter are defined as variables, and a collected particulate-matter weight deriving means by which the physical factor signal related to the operation of the internal-combustion engine and the electromagnetic-wave intensity signal detected by the electromagnetic-wave detecting means are collated with a memory means of the weight collected particulate matter.

Furthermore, according to claim 3 the invented exaust-gas purifier is equipped with a filter collecting the particulate-matter contained in the exhaust-gas of internal-combustion engine, an electromagnetic-wave supplying means supplying electromagnetic-wave into a space in which the filter is housed, an electromagnetic-wave detecting means coupled to the electromagnetic-wave produced in the space housing the filter and detecting the intensity of electromagnetic-wave, and a regeneration means removing the particulate-matter collected on the filter operated by the signal outputted from the electromagnetic-wave detecting means: wherein the exhaust-gas purifier is provided with; a gas-flow detecting means detecting the flow of exhaust-gas in the filter, a time-integrating means integrating the periods during which exhaust-gas is flowed in the filter according to the detected signal outputted from said gas-flow detecting means, a collected particulate-matter weight memory means determining the weights of particulate-matter collected by the filter and defining the integrated time value and the intensity of detected electromagnetic-wave as variables by using a same or similar internal-combustion engine, filter, flow detecting means, time-integrating means, electromagnetic-wave supplying means, and electromagnetic-wave detecting means, and a collected particulate-matter weight deriving means deriving the weight of particulate-matter collected by the filter by collating the time value counted by the time integrating means and the value detected by said electromagnetic-wave detecting means with the values stored in the collected particulate-matter weight memory means.

## BRIEF DESCRIPTION OF THE DRAWINGS

Figure 1
A structure of the invented exhaust-gas purifier equipped with a device judging the weight of collected particulate-matter, which is a first embodiment of the invention.

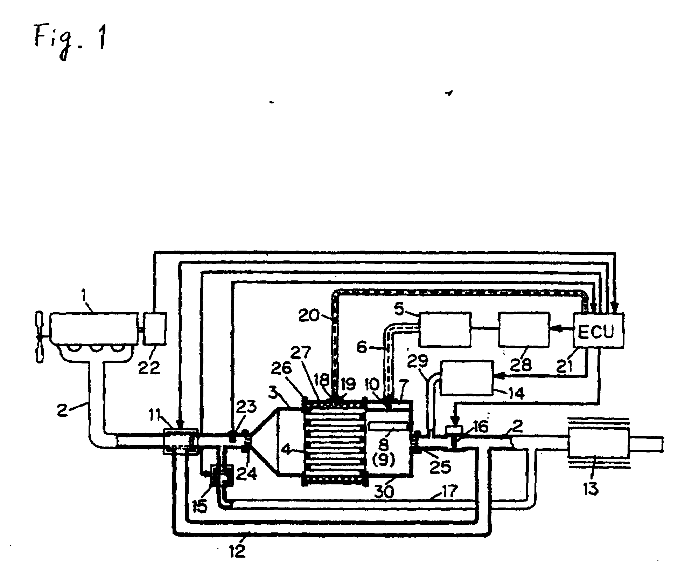

Figure 2
This shows lines of same particulate-matter weight drawn on a characteristics taking the integrated exhaust-gas flow periods and the output of electromagnetic-wave detection means obtained by the first embodiment of the invention shown in Fig. 1 as parameters.

Figure 3
A structure of the invented exhaust-gas purifier equipped with a device judging the weight of collected particulate-matter, which is a second embodiment of the invention.

Figure 4
A block diagram of the device judging the weight of collected particulate-matter, which is the second embodiment of the invention.

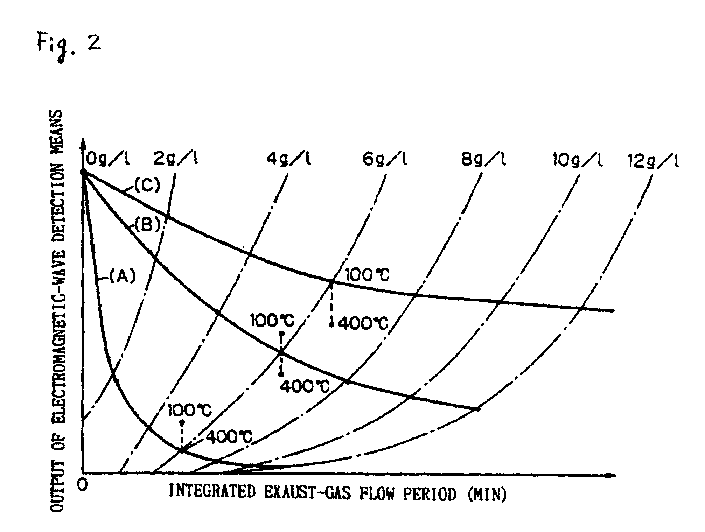

Figure 5
A diagram showing equal-weight lines of collected particulate matter drawn on a characteristics curve obtained by the second embodiment shown in Fig. 2, wherein the integrated exhaust-gas flow time and the output of electromagnetic-wave detection means are taken as parameters.

## DETAILED DESCRIPTION OF THE INVENTION

### Embodiment-1

A first embodiment of the invention is now explained by referring the attached drawings.

Fig. 1 shows a construction of exhaust-gas purifier which is a first embodiment of the invention. In Fig. 1, 1 is an internal-combustion engine (such as a diesel engine), 2 is an exhaust-gas pipe from which exhaust-gas is exhausted. 3 is a heating space (a space in which the filter is housed) provided at a middle point of exhaust pipe 2. 4 is a honey-comb structured ceramic-filter housed in said heating space, and by this, the particulate-matter contained in exhaust-gas is collected while passing through said filter,

5 is an electromagnetic-wave generator supplying microwave into said heating space in order to heat said particulate-matter by induction, 6 and 7 are a coaxial-transmission line and a rectangular wave-guides disposed in a shape of ring respectively guiding said microwave generated by electromagnetic-wave generator 5 into heating space 3, 8 and 9 are a pair of feed-holes feeding the generated electromagnetic-wave into heating space 3, and 10 is an antenna for converting coaxial waveguides.

Though only one filter 4 is shown, said exhaust-pipe may be branched into plural exhaust-pipes, and filter 4 may be installed on each of said branches of exhaust-pipe. 11 is a valve switching said exhaust-gas guiding the exhaust-gas exhausted from internal combustion engine 1 into filter 4 normally, but said exhaust-gas may be switched into branched exhaust-pipe 12 by using valve 11 when regeneration of said filter is conducted, and 13 is a muffler.

14 is a gas supplying means supplying a gas containing oxygen into heating space 3, 15 and 16 are valves controlling the flow of gas containing oxygen into filter 4, and valve 15 is installed at a position between the heating space 3 and branch 17 of exhaust-gas, and valve 16 is installed at a position between the heating space 3 and exhaust-pipe 2 which is opened to open space.

By controlling these two valves, the gas accelerating the burning of heated particulate-matter is guided into filter 4 during the period of filter-regeneration. 18 is a means (electromagnetic wave detection means) to detect the intensity of microwave within a neighboring space and is installed in a space within filter 4 which is excluded from the flow of exhaust-gas, and a part of core-conductor 19 of coaxial-waveguide is protruded into heating space 3.

The signal showing the microwave-intensity detected by microwave-detection means 18 is inputted into control-means 21 consisted of an electronic control unit (ECU) through coaxial line 20, 22 is an alternator (a means detecting the flow of exhaust-gas), by which the electrical output of said alternator which is variable according to the rotating speed of internal combustion engine 1 is inputted into control means 21.

Furthermore, although only one microwave detection means 18 is shown in the drawing, plural means of such may be installed, 23 is a temperature-detecting means (a means to detect the flow of exhaust-gas), installed at a position near filter 4 of exhaust pipe 2 between the heating space 3 and the branch 17. In a case where exhaust-pipe is branched into plural pipes, filter 4 has to be installed on each of the branched pipes, and said temperature detecting means has to be installed at positions near said filters respectively so that the flow of exhaust-gas in each of the filters can be detected. Temperature detecting means 23 is to detect the temperature of exhaust-gas flowing through filter 4 when it is in a process of filter-regeneration, and the output signal thereof is inputted into control means 21.

Heating space 3 provides a space within which microwave is substantially enclosed by means of shields 24 and 25 consisted of punched metal-sheet or honey-comb shaped metal-sheet. 26 is a heat-insulator installed within a space between the external surface of filter 4 and wall 27 constituting heating space 3, and by this, filter 4 is supported.

The space enclosed by said heat-insulator is closed against the flow of exhaust-gas. Microwave-detecting means 18 is to detect the intensity of microwave at a predetermined position set in a space enclosed by heat-insulator 26. 28 is a power-supply of microwave generating means 5. 29 is a pipe by which the gas generated by gas-supplying means 14 is transferred.

A pair of feed-holes 8 and 9 are installed in the wall facing to exhaust pipe 30 and these are disposed at the end of rectangular wave-guide 7 disposed in a shape of ring. Antenna 10 is so disposed at a desired position on ring-disposed rectangular wave-guide that microwave having a phase difference of 180° can be radiated into heating space 3 from two feed-holes 8 and 9, and microwave detecting means 18 is disposed at a position where the detected microwave intensity is monotonously decreased in proportion to the increase of weight of collected particulate-matter.

In here, since the dielectric-constant of filter is increased while the wavelength within the filter is decreased in proportion to the weight increase of collected particulate-matter, a phase-change in the detected microwave is produced by this, and this phase-change is utilized in the fundamental principle of weight measurement of collected particulate-matter.

In the above constructed exhaust-gas purifier, the measurement of weight of particulate-matter is carried out during the operation of internal-combustion engine 1, and the processes of this weight measurement are explained below.

Microwave generating means 5 is operated for a predetermined period by the signal outputted from control means 21, and the intensity of microwave detected by microwave-detection means 18 is incorporated in control means 21 after a predetermined time after the operation of microwave-generating means 5, and the time of this signal incorporation is an order of 1/50 seconds.

After the incorporation of microwave-intensity signal, the operation of microwave-generating means 5 is suspended. Moreover, control means 21 memorizes the integrated periods during which the output of alternator 22 is generated, or the integrated periods during which the detected temperature-levels are higher than a predetermined level as the integrated periods during which the exhaust-gas is flowed through filter 4.

After this, based on the incorporated detection-signal outputted from microwave-detecting means 18 and the integrated periods during which the exhaust-gas is fed to filter 4, control means 21 executes a predetermined arithmetic-processing or a process collating with the map. When the weight of collected particulate-matter obtained by these processes became higher than a predetermined weight value, a process of filter regeneration is commenced.

However, if the weight of collected particulate-matter is too low, the burning of collected particulate-matter at the filter regeneration process could be inadequate leaving a large amount of burn residue. On the other hand if the weight of collected particulate-matter is too much, the burning would be conducted at an abnormally high temperature bringing filter 4 at an excessively high temperature causing possible melt or crack of filter 4.

The weight range of collected particulate-matter avoiding possible mechanical damages of filter 4 is variable depending on the time required to the filter-regeneration. Since the condition in which the filter-regeneration can be conducted within a reasonably short period assuring the life of filter 4 is that the weight of collected particulate-matter should be within a range from 4 to 6 grams/l (1 is filter volume), the weight of particulate matter collected by filter 4 has to be determined precisely, and this is possible only by using the present invention.

Then, the method to judge the weight of collected particulate matter proper to commence the filter-regeneration is described in next. A relationship between the integrated exhaust-gas flow period and the output of microwave detection means 18 obtained when the load of internal-combustion engine is varied under a constant rotating speed are shown in Fig. 2 wherein (A) is a characteristics obtained at high load, (B) is at intermediate load, and (C) is obtained at light load.

Furthermore, a group of simple-broken lines shown in Fig. 2 are lines showing equal-weights of collected particulate matter, and this shows the coordinates of weight of particulate matter from 0 to 12 grams at a line interval of 2g/l. As for the several points on the characteristics line shown in Fig. 2, these are on a broken line shown in Fig. 2 connecting the outputs of microwave-detection means 18 at 100 and 400 °C respectively.

The characteristics shown in Fig. 2 shows that the weight of collected particulate-matter is higher for the higher engine load, and for a small increment in the integrated exhaust-gas flow time, and the output of microwave detection means is smaller for the higher temperature of exhaust-gas, and furthermore, the output of microwave-detection means is low for the same weight of collected particulate-matter when the internal-combustion engine is operated at a high load (A) but the weight ratio of soot is high.

The weight of collected particulate-matter shown by a single broken line in Fig. 2 shows equal-weight lines for the collected particulate-matter. By using a function or a map derived from these equal-weight lines of particulate-matter, two variables including the integrated exhaust-gas flow periods and the output of microwave detection means can be obtained, and from these two variables, the weight of particulate-matter starting the filter regeneration can be determined.

By employing this weight judging method, the errors in determining the weight of particulate-matter starting the filter regeneration originated from the difference in particulate-matter compositions can be excluded. Moreover, the errors in determining the weight of particulate-matter originated from the change in exhaust-gas temperature can be minimized also so that no temperature correction has to be applied thereto.

Since the time necessary to incorporate the output of microwave-detection means 18 into control means 21 is an order of 1/50 seconds, the weight of particulate-matter can be determined precisely independent of the change of operating condition of internal-combustion engine 1.

The process determining the weight of particulate-matter starting the filter regeneration and the regeneration process started by this are explained in next.

In judging the weight of particulate-matter, two functions including the integrated exhaust-gas flow periods and the output of microwave-detection means are set as variables, and based on these functions, a question related to the weight of collected particulate-matter if it is heavier than a predetermined value or not, can be answered.

For example, when the integrated exhaust-gas flow periods is expressed by X, and the output of microwave-detection means is expressed by Y, the line of 4g/l shown in Fig. 2 can be approximated by Eq. 1

$$\text{Eq. 1} \qquad Y = aX^b + c \text{ (where a, b, and c are constants)}$$

In Eq. 1, if the integrated exhaust-gas flow period is expressed by $X_1$ and the output of microwave-detection means is expressed by $Y_1$, and

$$\text{Eq.2} \qquad \text{if } Y_1 \geq aX_1^b + c,$$

the weight of particulate-matter is judged to be less than 4g/l, and

$$\text{Eq. 3} \qquad \text{if } Y_1 < aX_1^b + c,$$

the weight of particulate-matter is judged higher than 4g/l, and the regeneration of filter is started right after the detection of this.

Moreover, the weight judging process can be executed by using a map processing also, and Table 1 shows an example of map processing.

**Table 1**

Table 1 is a map prepared by mapping the integrated exhaust gas flow periods and the outputs of microwave-detection means shown in Fig. 2 set as variables. The numerical values shown in Table 1 are the weight values of particulate matter. Whenever one of these is detected, the filter regeneration has to be started.

By using the map of such, the absolute value of weight of particulate-matter can be determined precisely, so that the filter-regeneration can be carried out at high efficiency. As a result of this, the range of weights of particulate-matter allowing the filter-regeneration can be extended considerably. In Table 1, the divisional intervals are coarser within a region where the outputs of microwave detecting means are high, while the divisional intervals are coarser also within a region where the integrated exhaust-gas flow periods is high.

By conducting a process providing unequal divisional intervals such as the one shown above, a memory of smaller capacity can be used in memorizing the content of map (the necessary capacity for column 1 is approximately 2 bytes).

Then, the operation of the invented exhaust-gas purifier which is a first embodiment of the invention, is explained in next by referring Fig. 1 and Table 1. In collecting the particulate matter, the gas exhausted from internal-combustion engine 1 is introduced into filter 4 by controlling valves 11, 15, and 16, so that the exhaust-gas exhausted out of an internal combustion engine is passed through filter 4, and the particulate matter contained in the exhaust-gas is collected at the filter so that the exhaust-gas is purified.

The operation of internal-combustion engine 1 and the flow of exhaust-gas through filter 4 are detected by means of alternator 22 or by temperature detecting means 23 so that the exhaust gas flow periods can be integrated.

In order to know the weight of particulate-matter collected by filter 4, microwave-generating means 5 is operated periodically, and the output of microwave-detecting means 18 obtained at that time and the integrated exhaust-gas flow periods obtained by that time are collated with the particulate weight judging map prepared by setting the integrated exhaust-gas flow periods and the output of microwave-detecting means 18 as variables.

Then, when the load of internal-combustion engine 1 is increased, the pressure-loss in filter 4 is increased also. causing engine-stagnation in a worst case. This is possible when the weight of particulate-matter collected by filter 4 became too high or when the filter is clogged by the collected particulate matter. Therefore, a periodical removal of particulate-matter collected by filter 4 (filter regeneration) has to be conducted.

The so-called filter-regeneration has to be started when the weight of collected particulate-matter is reached to a predetermined weight level, and the timing of this is judged by control means 21.

At the filter-regeneration, valves 11, 15, and 16 are controlled so that the exhaust-gas from internal-combustion engine is by-passed through branched exhaust pipe 12, and the particulate matter collected on filter 4 is heated by means of microwave energy generated by microwave-generating means 5. When the particulate-matter is heated at a predetermined timing, gas (natural air is usable) is supplied into heating space 3 including filter 4 by operating a gas-supplying means 14, and by this, the collected particulate-matter is burned out and removed from filter 4.

By this, the process of filter-regeneration is completed, and the integrator of exhaust-gas flow periods are reset to zero, and valves 15 and 16 are so controlled that the exhaust-gas can be guided toward filter 4. After this, valve 11 is operated at a proper timing so that the exhaust-gas outputted from internal-combustion engine 1 can be supplied to filter 4 again.

By using the invented device judging the weight of particulate matter, the weight of collected particulate-matter starting the filter-regeneration can be Judged precisely independent of the operating condition of internal-combustion engine 1. Therefore, the filter-regeneration under a condition of proper weight of particulate-matter is always possible, and as a result of this, longer filter life is expectable.

Moreover, in the above-shown embodiment, an filter regeneration method employing a microwave induction-heating has been explained, but the present invention is not necessary be limited within a scope of this, but the same effects can be obtained by using a heating method other than the above, such as a method using heater, burner, particulate self-burning utilizing the exhaust-gas temperature rise employed in exhaust throttling or fuel injection timing advance control, counter flow (of exhaust gas), or others.

## EMBODIMENT-2

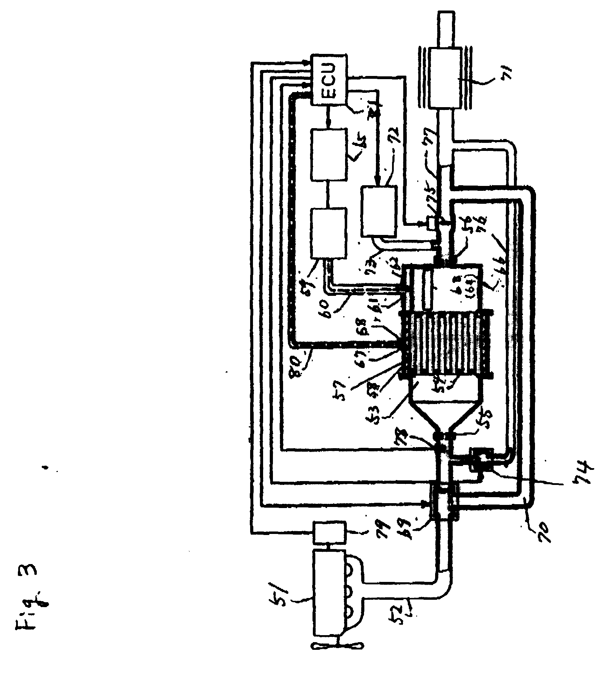

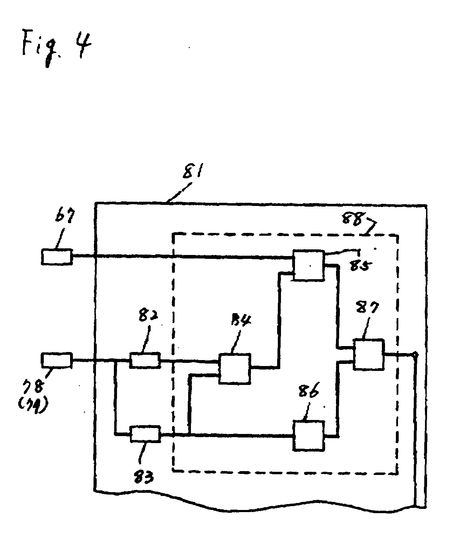

A second embodiment of the invention is now explained below referring Figs. 3 and 4 showing a structure of the invented exhaust-gas purifier. As shown in Figs 3 and 4, the exhaust-gas exhausted from internal-combustion engine 51 (e.g. diesel engine) is conducted to filter 54 housed in heating space 53 (a space in which filter 54 is housed) through exhaust-pipe 52.

Filter 54 is constituted of honeycomb-structured ceramics, and by this, the particulate-matter contained in exhaust-gas is collectted while flowing through filter 54. Heating space 53 is a space within which microwave energy is confined by using microwave shielding means 55 and 56 consisted of punched metal sheet or honeycomb metal sheet. 57 is a heat-insulator provided in a space between the external wall of filter 54 and the inter-nal wall 58 of heating space 53, acting as a supporter of filter 54 at the same time. The space enclosed by heat-insulator is shielded against the flow of exhaust-gas. Although only one filter 54 is shown here, exhaust-pipe 52 may be branched into plural exhaust pipes on which filters are installed individually.

The microwave generated by microwave generator 59 (electromagnetic wave supplying means) is supplied into heating space 53 through coaxial transmission line 60, antenna 61 converting the coaxial waveguide, ring-formed rectangular waveguide 62, and a pair of feed holes 63 and 64, so that induction heating can be applied on the particulate matter collected by filter 54.

65 is a power supply to microwave generating means 59, and feed holes 63 and 64 are disposed on facing positions on the wall of exhaust-gas pipe 66 which is a constituting element of heating space and on the end of ring-formed rectangular waveguide 62. Antenna 61 converting the coaxial waveguide is so disposed on a predetermined position on ring-formed rectangular waveguide 62 that the microwave can be radiated into heating space from feed holes 63 and 64 separated by a phase angle of 180°.

67 is microwave-intensity detecting means disposed in heating space 53 which is isolated from the exhaust-gas by means of heat-insulator 57 in order to detect the microwave-intensity at a location near to microwave-generating means 59, and is disposed at a position protruded into heating space 53 by utilizing a coaxial-line of which core conductor 68 is protruded therein by a predetermined length.

Microwave-intensity detecting means 67 is disposed at a position at which a monotonously decreased microwave-intensity with an increase of the weight of collected particulate matter at a neighborhood of desired particulate weight can be observed.

At said positions, increases of the dielectric constant of filter 54 can be observed with an increase of the weight of collected particulate-matter, and this causes a shorter microwave wavelength, and a phase change at the detecting position. The fundamental principle of measurement of the collected particulate matter commencing the filter regeneration is dependent on the utilization of this phase change.

Although an example utilizing only one microwave-intensity detecting means 67 has been shown, plural of this means may be disposed. Though the exhaust-gas exhausted from internal combustion engine 51 is introduced in filter 54 normally by operating valve 69, this may be switched to a position at which the exhaust gas is introduced into exhaust branching pipe 70 at the time of filter-regeneration (this means burning removal of particulate-matter collected by filter 4), and the exhaust-gas is exhausted through muffler 71.

Gas supplying means 72 (regeneration means) supplies a gas containing oxygen into heating space 53, and the flow of said gas is controlled by valves 74 and 75 which are valves controlling the flow of said gas containing oxygen into filter 54.

Valve 74 is disposed on branch pipe 76 acting as a path of exhaust-gas passed through filter 54 at filter regeneration, and valve 75 is disposed at a position between heating space 53 and exhaust-pipe 77 opened to the air, and these two valves are so controlled that the gas accelerating the burning of collected particulate-matter is guided into filter 54 during the period of filter-regeneration.

Whereas 78 is a means to detect the exhaust-gas temperature, this is usable as a means to detect the flow of exhaust-gas or a means to detect the engine operation. Therefore, it can be one of the means detecting the engine-load condition by which physical factors related to the engine operation can be determined, 78 is disposed at a position near filter 54 between the heating space 53 and branch 76. The temperature of exhaust-gas detected by exhaust-gas temperature detecting means 78 is higher in proportion to the increase of load of engine 51.

In a case where exhaust-pipe 52 is branched into plural pipes, filters have to be installed individually on each of the plural branched pipes, and plural temperature detecting means have to be installed at the positions near said respective filters so that the flow of exhaust-gas in each of filters are detectable.

Exhaust-gas temperature detecting means 78 is to detect the temperature of exhaust-gas flow in filter 54 when it is regenerated, and 79 is a throttle-angle detecting means disposed on internal-combustion engine 1, but it can be one of the means to detect the load of internal-combustion engine (mechanical signal detecting means) and the wider throttle-angle is considered as a higher load of internal-combustion engine 51.

When throttle-angle detecting means 79 is used as an internal combustion engine load detecting means. the load condition of internal-combustion engine can be determined precisely while, when exhaust gas temperature detecting means 78 is used, the information available through it is usable for the filter regeneration, but both of these can be used simultaneously as well.

Furthermore, an engine operation detecting means detecting the output of alternator or dynamo, an electrical signal detecting means, an intake-air volume detecting means utilizing the intake-air volume sensor installed at the intake of internal combustion engine, or an exhaust-gas volume detecting means utilizing the information outputted from an engine-rotation sensor can be utilized also.

In determining the weight of collected particulate-matter, the signal outputted from microwave-intensity detecting means 67 is inputted into control means 81 which is an electronic control unit (ECU) through coaxial line 80. On the other hand, the output of exhaust-gas temperature detecting means 78 or throttle-angle detecting means 79 is inputted into control means 81.

When the temperature detected by exhaust-gas temperature detecting means 78 is higher than a predetermined temperature, or when a predetermined signal is outputted from throttle-angle detecting means 79, first time-integrating means 82 integrates the periods during which the exhaust-gas from engine 51 is guided into filter 54, and second time-integrating means 83 integrates the periods during which the temperature of exhaust-gas of engine 51 is less than a predetermined temperature, or the periods during which the throttle-angle is held at an angle less than a predetermined angle.

In subtraction means 84, the output of second time integrating means 83 is subtracted from the output of first time integrating means 82. When the load of internal-combustion engine 51 is higher than the predetermined value, the weight of collected particulate-matter can be derived from the first collected particulate matter weight processing means 85 wherein the result of said subtraction process and the output of microwave intensity detecting means 67 are processed as variables.

When the load of internal-combustion engine 51 is less than the predetermined value, the weight of collected particulate matter can be derived from second collected particulate matter weight processing means 86 wherein the output of second time integrating means 83 is processed as a variable.

The outputs of first and second collected particulate-matter weight processing means 85 and 86 are added together by collected particulate matter weight adding means 85, and this is regarded as the deter-mined collected particulate-matter weight. Collected particulate-matter weight determining means 88 is constituted of time sub-traction means 84, first collected particulate-matter weight processing means 85 provided with a collected particulate matter weight memory means and a collected particulate-matter weight deriving means, a second collected particulate-matter weight processing means 86 (multiplying means), and particulate-matter weight adding means 87 (collected particulate-matter weight adding means).

In this case, when the collected particulate-matter weight is too low for filter regeneration, burning of collected particulate matter at filter regeneration process could be inadequate leaving a large amount of burn residue. On the other hand if the weight of collected particulate-matter is too high, the burning temperature could be an abnormally high exposing filter 54 to an excessively high temperature, causing melt or crack of filter 54.

The weight range of collected particulate-matter avoiding possible mechanical damage of filter 54 is variable depending on the time required to regenerate the filter. For the regeneration condition in which the filter regeneration can be conducted within a short period (such as 20 minutes), the weight of collected particulate matter assuring a long filter life should be within a range of 4 to 6 grams/l (1 is filter volume, and so forth), therefore, the weight of particulate-matter collected by filter 54 has to be determined precisely, and this is possible by employing the method of present invention.

Since the above-described method determining the weight of collected particulate-matter and the start of filter-regeneration can be carried out in effect during the operation of internal-combustion engine 51, details of this method are described next.

Microwave generating means 59 is operated at a predetermined period by control means 81 during the operation of internal combustion engine 51, and the output of the microwave-intensity detecting means is incorporated into control means 81 at a pre-determined time after the start of operation of microwave generating means 59.

At the time of the data incorporation, the periods during which the exhaust-gas exhausted from engine 51 is passed through filter 54 are integrated by first time-integrating means 82. This is an integration of periods during which the temperature detected by exhaust-gas detecting means 78 is maintained at a temperature above a predetermined temperature or the integration of periods during which a predetermined output has been outputted from throttle-angle detecting means 79, although the integration of periods during which a predetermined output has been outputted from an alternator (not shown) coupled to internal-combustion engine 51 may be used, instead.

Furthermore, when the load of internal-combustion engine 51 is less than a predetermined value, the periods of this are integrated by second time-integrating means 83. This is an integration of the periods during which the temperature of exhaust-gas outputted from engine 51, detected by exhaust-gas temperature detecting means 78 have been less than a predetermined temperature, or the periods during which the throttle-angle determined by throttle-angle detecting means 79 is held at an angle less than a predetermined angle.

After this, based on the output of microwave-intensity detecting means 67 and the integrated outputs of first and second time-integrating means 82 and 83 incorporated in control means 81, the later-described processing are executed by control means 81. The filter regeneration is executed as soon as the weight of collected particulate-matter became more than a predetermined weight value.

Then, the method to judge the weight of collected particulate matter proper to the starting of filter-regeneration is described in next. When internal-combustion engine 51 is operated at a very light load like a condition of idling, the exhausted particulate-matter is occupied by SOF components mostly.

Since the effects of SOF components on microwave is very small comparing that of soot, precise detection of the accumulated SOF components (SOF is adsorbed on the filter, strictly speaking) is nearly impossible by using microwave-intensity detecting means 67. In this case, based on the output of exhaust-gas temperature detecting means 78 or throttle-angle detecting means 79, second time-integrating means 83 integrates the periods during which internal-combustion engine 51 had been operated at a load less than a predetermined value, and the integrated value is set as a variable of second collected particulate-matter weight processing means 86.

Under this operating conditions, the weight of collected particulate-matter can be derived by multiplying the weight of collected particulate-matter accumulated on filter 54 during a limited period on the output of second time-integrating means 83.

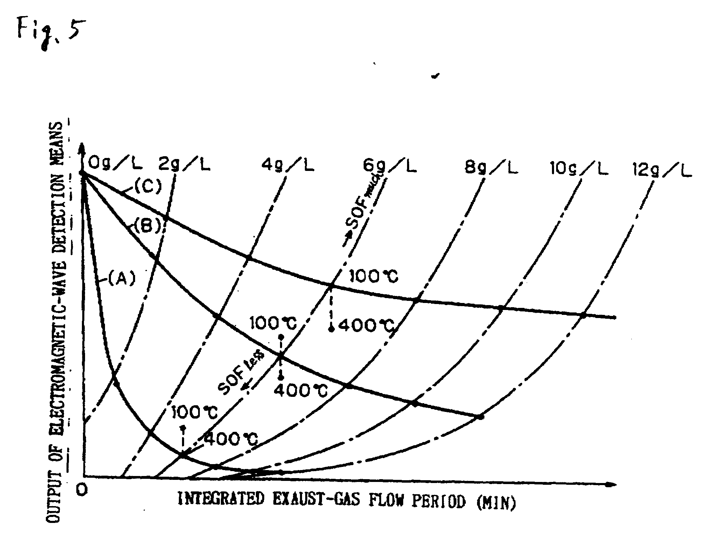

Fig. 5 shows a relationship between the exhaust-gas flow periods in filter 54 and the output of microwave-detection means 67 obtained when an internal-combustion engine load is varied under a condition of constant rotating-speed. In Fig. 5, (A) is a characteristics obtained at a high load, (B) is at intermediate load, and (C) is obtained at light load.

Furthermore, a group of single broken lines shown in Fig. 5 are lines of equal-weights of collected particulate, showing the coordinates of particulate-matter weight from 0 to 12 grams spaced at an interval of 2g/l. As for the several points on the characteristics shown in Fig. 2, these are on a broken line shown in Fig. 5 connecting the outputs of microwave-detection means 67 obtained at 100 and 400 °C respectively.

As seen from the characteristics curves shown in Fig. 5, the weights of collected particulate-matter are higher when internal-combustion engine 51 is operated at higher load and for the smaller increment of integrated exhaust gas flow periods, and the output of microwave-detection means is smaller when the temperature of exhaust-gas is higher, and furthermore, the output of microwave-detection means 67 is lower for the same collected particulate-matter weight when the internal-combustion engine is operated at a heavy load (A) when the weight ratio of soot is high.

The weights of collected particulate-matter expressed by equal-weight lines are shown by a single broken line in Fig. 5.

By using a map prepared on this equal-weights of collected particulate-matter lines shown in Table 1 (numerical values shown in Table 1 are the weights of collected particulate-matter at which the filter-regeneration can be commenced), and from two variables including the integrated exhaust-gas flow periods and the output of microwave-detection means 67, and by deriving the weight of collected particulate-matter when the load of internal-combustion engine is higher than a predetermined value by using first collectted particulate-matter weight deriving means 85, the above-mentioned errors in judging the weight of particulate matter caused by the characteristics difference of particulate matter can be eliminated.

The integrated time of exhaust-gas flow periods in this case is obtained by subtracting the integrated time (a value obtained by the second time-integrating means 83) during which the load of internal-combustion engine 51 is kept lower than a predetermined value from the integrated time (integrated value obtained by first time-integrating means 82) during which exhaust-gas is passed in filter 54 by using time-subtraction means 84.

This means that errors are possible if the integrated time during which engine is operated at light load, because the amount of particulate-matter collected at the time where the load of internal-combustion engine is light is undetectable by microwave intensity detecting means 67 (the weight of collected particulate matter is estimated to be substantially higher than the actual weight).

In this case, the outputs of the first and the second collected particulate-matter weight processing means added by particulate-matter weight adding means 87, is defined as the weight of particulate-matter collected by filter 54.

Thus, the precise determination of the weight of collected particulate-matter in every operating conditions of internal-combustion engine 51 is possible by switching the collected particulate-matter weight processing methods. Furthermore, since the errors in the determination of weight of collected particulate matter are low as shown in Fig. 5 even in cases where the variations of filter temperature are large, no temperature correction has to be made.

Since the time necessary to incorporate the output of microwave-detection means 67 into control means 81 is an order of 1/50 seconds, no effects of it can be seen, the weight of particulate-matter can be determined precisely independent of transitional changes of operating conditions of internal combustion engine 51.

The processes carrying out the regeneration of filter 54 determined on the measurement of the weight of collected particulate matter are explained below by referring Fig. 3.

In collecting the particulate-matter, valves 69, 74, and 75 are so controlled that the exhaust-gas outputted from internal-combustion engine 51 is introduced in filter 54, and by this, particulate-matter contained in exhaust-gas is collected on filter 54 purifying the exhaust-gas. Increases of flow-resistance and load of internal-combustion engine are caused by the increase of particulate-matter collected on filter 54, and in an extreme case, this may result in engine stagnation.

Therefore, the regeneration of filter 54 possible by removing the particulate-matter collected on filter 54 as soon as the weight of particulate-matter is reached to a proper predetermined value, is strongly recommended.

As above-described, based on the output of collected particulate matter weight judging means 88 (means to estimate the weight of collected particulate-matter) to which the weight of particulate-matter is reached to a level affecting the engine operation, the timing of regeneration of filter 54 is judged by control-means 81, and the regeneration of filter 54 is commenced.

Furthermore, at the filter-regeneration, valves 69, 74, and 75 are so controlled that the exhaust-gas outputted from internal combustion engine 51 is bypassed through exhaust-gas branching-pipe 70, and the operation of microwave-generating means 59 is started so that the particulate-matter collected on filter 54 is induction-heated by the generated microwave,

After the heating of particulate-matter, gas (natural air can be used) is introduced therein by operating air-supplying means 72 at a predetermine timing in order to burn out the collected particulate-matter so that it can be completely removed from filter 54. By using the processes shown in above, the regeneration of filter 54 is completed, and the integrated values of the first and the second time-integrating means 82 and 83 are reset and are set at zero respectively, valves 69, 74, and 75 are so controlled that the exhaust-gas is supplied to the regenerated filter 54 again.

After this, valve 69 is so controlled that the exhaust-gas from internal-combustion engine 51 is flowed in filter 54. Thus, the weight of collected particulate-matter can be determined precisely independent of the variations of operating conditions of internal-combustion engine 51 by using the invented collected particulate-matter weight judging means which is an embodiment of the invention, and filter 54 can be regenerated whenever the weight of particulate-matter is reached to a predetermined proper value. Thus, filter 54 can be protected against any possible damages and the extension of life of filter 54 becomes possible.

Moreover, an example where induction-heating produced by microwave is employed to filter-regeneration has been shown so far, this does not necessarily mean that the scope of the invention is limited within the above-shown range, but the effects same as above can be obtained by employing another method such as heater-heating, burner heating, self-burning of particulate-matter utilizing the temperature rise of exhaust-gas utilizing the method of exhaust throttling, advanced fuel-injection timing control, or reverse cleaning (direction of exhaust-gas is reversed).

As above-explained, by the exaust-gas purifier using the particulate-matter weight judging means of the invention, the effects shown below can be obtained:

(1) By determining the weight of particulate-matter collected by a filter using an exhaust-gas flow detecting means detecting the flow of exhaust-gas in said filter and an electromagnetic wave detecting means detecting the electromagnetic-wave in a space in which the filter is housed, and based on the results obtained by using these detecting means, determination of precise weight of collected particulate-matter can be carried out independent of variations of the operating conditions of internal-combustion engine.

(2) By constituting the exhaust-gas flow detecting means by using a means detecting the electrical signals variable according to the operating condition of internal-combustion engine, signals directly related to the operation of internal-combustion engine is available so that the precise flow of exhaust-gas is detectable.

(3) By constituting the exhaust-gas flow detecting means by using a means to detect the exhaust-gas temperature at near of said filter, only the flow of exhaust-gas in the examined filter can be individually determined even if the exhaust-pipe is branched into plural pipes.

(4) By constituting the electromagnetic-wave detecting means by using a means to detect electromagnetic-wave, it can be considered as a system independent of the system of exhaust-gas exhausted from internal-combustion engine.

(5) By judging the weight of particulate-matter conducted by using a function of which variables are the detected value of electro-magnetic wave and the integrated periods of exhaust-gas flow determined at detecting points, the weight of particulate matter can be determined very easily so far as it is within a permissible range.

(6) By conducting the judgement of particulate-matter weight using a particulate-matter weight determining map prepared in advance and collating the detected value of electromagnetic-wave obtained by electromagnetic-wave detecting means and the integrated exhaust-gas flow time at that time with said particulate matter weight determining map, the weight of particulate-matter collected on the filter can be determined precisely. Moreover, regeneration of filter can be conducted at a high efficiency depending on the weight of particulate-matter. As a result of this, the range of weights of particulate-matter making the filter regeneration possible can be wider.

(7) The memory capacity required for said particulate-matter weight determining map can be smaller by making an unequal time divisions of integrated times of exhaust-gas flow.

(8) The memory capacity for said particulate-matter weight determining map can be smaller by making an unequal signal magnitude divisions of detected magnitude of electromagnetic-wave.

(9) By processing the weight of collected particulate-matter using the output of time-subtraction means (integrated time of exhaust-gas flow when the load of internal-combustion engine is higher than a predetermine value) and the output of the microwave intensity detecting means are set as variables, the weight of collected particulate-matter can be determined precisely independent of the transiential variations of operating condition of internal-combustion engine even if the load of internal combustion engine is higher than a predetermined value.

(10) By processing the weight of collected particulate-matter using the output of the second time-integrating means (integrated time of exhaust-gas flow when the load of internal-combustion engine is lower than a predetermine value) as a variable, the weight of collected particulate-matter can be determined precisely even when internal-combustion engine is operated at very light load such as idling for long period.

(11) By processing the weight of collected particulate-matter obtained when the load of internal-combustion engine is less than the predetermined value or when it is less than a predetermined value independently, and by making the added values of these as the weight of collected particulate-matter, the weight of collected particulate-matter can be determined precisely at every possible operating conditions of internal-combustion engine.

(12) By employing the means to detect the throttle-angle of internal-combustion engine as a load-condition detecting means of internal-combustion engine, the loading-condition of internal combustion engine can be determined precisely.

(13) By employing the means to detect the exhaust-gas temperature near the filter as the means to detect the load-condition of internal-combustion engine, the means detecting the load condition of internal-combustion engine can be substituted by the temperature detecting means applicable to filter regeneration so that the structure thereof can be simplified.

**Table 1**

| OUTPUT OF ELECTROMAGNETIC-WAVE DETECTION MEANS | INTEGRATED EXAUST-GAS FLOW PERIOD (MIN) | | | | | | | | | | | | |
|---|---|---|---|---|---|---|---|---|---|---|---|---|---|
| | 10 | 20 | 30 | 40 | 50 | 60 | 70 | 80 | 90 | 100 | 120 | 140 | 160 |
| X | 3 | 3 | 4 | 5 | 5 | 6 | 7 | 8 | 9 | 9 | 10 | 11 | 12 |
| 2X | 3 | 3 | 4 | 5 | 5 | 6 | 7 | 8 | 8 | 9 | 10 | 11 | 12 |
| 3X | 3 | 3 | 4 | 4 | 5 | 6 | 7 | 7 | 8 | 8 | 9 | 10 | 11 |
| 4X | 2 | 3 | 3 | 4 | 5 | 5 | 6 | 7 | 7 | 8 | 9 | 10 | 11 |
| 5X | 2 | 3 | 3 | 4 | 5 | 5 | 6 | 6 | 7 | 7 | 8 | 9 | 10 |
| 6X | 2 | 3 | 3 | 4 | 4 | 5 | 6 | 6 | 6 | 7 | 8 | 9 | 10 |
| 7X | 2 | 3 | 3 | 3 | 4 | 5 | 5 | 6 | 6 | 7 | 8 | 9 | 10 |
| 8X | 2 | 2 | 3 | 3 | 4 | 5 | 5 | 6 | 6 | 6 | 7 | 9 | 10 |
| 9X | 2 | 2 | 3 | 3 | 4 | 4 | 5 | 5 | 6 | 6 | 7 | 8 | 9 |
| 10X | 2 | 2 | 3 | 3 | 4 | 4 | 5 | 5 | 6 | 6 | 7 | 8 | 9 |
| 12X | 1 | 2 | 3 | 3 | 4 | 4 | 5 | 5 | 5 | 6 | 7 | 7 | 8 |
| 14X | 1 | 2 | 2 | 2 | 3 | 4 | 4 | 5 | 5 | 6 | 6 | 7 | 8 |
| 16X | 1 | 1 | 2 | 2 | 3 | 4 | 4 | 4 | 5 | 5 | 6 | 7 | 7 |
| 18X | 1 | 1 | 2 | 2 | 3 | 3 | 4 | 4 | 5 | 5 | 6 | 6 | 7 |
| 20X | 1 | 1 | 2 | 2 | 3 | 3 | 3 | 4 | 4 | 5 | 6 | 6 | 7 |
| 22X | 1 | 1 | 1 | 2 | 2 | 3 | 3 | 4 | 4 | 5 | 5 | 6 | 7 |
| 24X | 1 | 1 | 1 | 2 | 2 | 3 | 3 | 4 | 4 | 4 | 5 | 6 | 6 |

## Claims

1. An exhaust gas purifier comprising:

   a filter (4) collecting the particulate matter contained in the exhaust gas of internal-combustion engine (1),

   an electromagnetic wave supplying means (5) supplying electromagnetic wave into a space (3) in which said filter is housed,

an electromagnetic wave detecting means (18) coupled to the electromagnetic wave produced in said space (3) in which said filter (4) is housed detecting the intensity of electromagnetic wave,

a means to estimate the amount of particulate matter collected by said filter from the signal obtained by said electromagnetic wave detecting means,

a regeneration means (15,16) removing the particulate matter collected on said filter operated by the signal output from said means to estimate the amount of particulate matter,

**characterized in that**

said means to estimate the amount of particulate matter collected estimate a weight thereof,

an engine operation detecting means is provided, and

said means to estimate the weight of collected particulate matter is provided with

a means to memorize physical factors in which the physical factors related to the operation of said internal combustion engine and the electromagnetic wave intensity within said space housing said filter are defined as variables, and

a collected particulate matter weight deriving means by which the physical factor signal related to the operation of said internal-combustion engine and the electromagnetic wave intensity signal detected by said electromagnetic wave detecting means are collated with a memory means of said weight of collected particulate matter.

2. An exhaust gas purifier according to claim 1 wherein

said engine operation detecting means is provided with at least one of

an electrical signal detecting means detecting the signal output from electrical components related to the operation of an internal-combustion engine,

an intake air volume detecting means (79) detecting the volume of intake air, an exhaust gas volume detecting means detecting the volume of exhaust gas exhausted from said internal-combustion engine, and

an exhaust gas temperature detecting means (23).

3. An exhaust gas purifier comprising:

a filter (54) collecting the particulate matter contained in the exhaust gas of internal-combustion engine (51),

an electromagnetic wave supplying means (59) supplying electromagnetic wave into a space (53) in which said filter (54) is housed,

an electromagnetic wave detecting means (67) coupled to the electromagnetic wave produced in said space (53) housing said filter and detecting the intensity of electromagnetic wave, and

a regeneration means (72,74,75) removing the particulate matter collected on said filter operated by the signal output from said electromagnetic wave detecting means,

**characterized in that**

said exhaust gas purifier is provided with;

a gas-flow detecting means detecting the flow of exhaust gas in said filter,

a time integrating means (82) integrating the periods during which exhaust gas is flown in said filter according to the detected signal output from said gas-flow detecting means,

a collected particulate matter weight memory means (85) determining the weights of particulate matter collected by said filter (54) and defining the integrated time value and the intensity of detected electromagnetic wave as variables by using a same or similar internal-combustion engine, filter, flow detecting means, time-integrating means, electromagnetic wave supplying means, and electromagnetic wave detecting means, and

a collected particulate matter weight deriving means deriving the weight of particulate matter collected by said filter by collating the time value counted by said time integrating means and the value detected by said electromagnetic wave detecting means with the values stored in said collected particulate matter weight memory means (86).

4. An exhaust gas purifier according to claim 3, further comprising:

an engine-load detecting means (79) detecting the load of said internal-combustion engine,

a second time integrating means (83) integrating the periods which satisfy both conditions that said exhaust gas is flown in said filter according to a respective detected signal output from said gas flow detecting means and that a load of said internal-combustion engine is kept low according to a signal output from said engine load detecting means,

a time subtracting means (84) subtracting the counts of said second time integrating means (83) from the counts of said first time integrating means (82)

wherein said collected particulate matter weight memory means determines the weights of particulate matter collected by said filter and defines the result output from said time subtracting means, the integrated time values and the intensity of detected electromagnetic wave as variables by using a same or similar internal-combustion engine, filter, flow detecting means, time-integrating means, electromagnetic wave supply means, and electromagnetic wave detecting means.

5. An exhaust gas purifier according to claim 4, further provided with;

a multiplying means (86) multiplying a predetermined value to the time value determined by said second time-integration means, and

a collected particulate matter weight adding means (87) deriving the weights of particulate matter collected by said filter by adding the collected particulate matter weight value derived by said collected particulate matter weight deriving means to the count obtained by said multiplying means.

6. An exhaust gas purifier according to claim 3 or 4; wherein
said collected particulate matter weight memory means (85) is constituted of collected particulate matter weight curves each of which is functionalized or collected particulate matter weight curves transformed into a form of matrix by allocating desired collected particulate matter weights on said time-dependent characteristics curve and collected particulate matter weight curves connecting each points on the equal collected particulate matter weights, obtained by drawing all of said collected particulate matter weight curves by connecting points showing equal collected particulate matter weights, and by setting the integrated time values and the detected electromagnetic wave values as variables based on the time dependent characteristics curve of detected electromagnetic wave value obtained by operating said internal-combustion engine under at least two different operating conditions defining the revolution and the load of said internal-combustion engine and the collected particulate matter weight determined after engine operation.

7. An exhaust gas purifier according to claim 6 wherein

said matrix is consisted of rows of integrated time value and columns of detected electromagnetic wave value, and

the intervals of said rows at large integrated time value regions are larger than the intervals of said rows at small integrated time value regions and/or the intervals of said columns at large detected electromagnetic wave value region are set larger than the intervals of said columns at small detected electromagnetic wave value regions.

8. An exhaust gas purifier according to claim 3 or 4 wherein

said gas flow detecting means is provided with at least one of

an electrical signal detecting means detecting the changes in electrical signals of electrical components produced in relation to the operation of the internal-combustion engine,

an in-take air volume detecting means detecting the volume of exhaust gas exhausted from the internal-combustion engine, and

at least one exhaust gas temperature (78) detecting means detecting the temperature of exhaust gas.

9. An exhaust gas purifier according to claim 3 or 4 wherein
said electromagnetic wave detecting means (67) is disposed at a predetermined position on a container wall facing to said filter (54) housed in a container.

10. An exhaust gas purifier according to claim 4 wherein
said engine load detecting means (79) is provided with a mechanical signal detecting means detecting the mechanical changes of mechanical components related to the operation of the internal-combustion engine and/or an exhaust gas detecting means detecting the temperature of exhaust gas of the internal-combustion engine.

**Patentansprüche**

1. Eine Abgasreinigungsvorrichtung umfassend:

einen Filter (4) zum Sammeln der aus Teilchen bestehenden Materie, die im Abgas eines Verbrennungsmotors (1) enthalten ist,

eine Zuführeinrichtung für elektromagnetische Wellen (5) zum Zuführen elektromagnetischer Wellen in einen Raum (3), in dem der Filter aufgenommen ist,

eine Detektionseinrichtung für elektromagnetische Wellen (18), die an die elektromagnetische Welle gekoppelt ist, die in dem Raum (3), in dem der Filter (4) aufgenommen ist, erzeugt wird, zum Detektieren der Intensität der elektromagnetischen Welle,

eine Einrichtung zum Abschätzen der Menge an der durch den Filter gesammelten aus Einzelteilchen bestehenden Materie aus dem durch die Detektionseinrichtung für elektromagnetische Wellen erhaltenen Signal,

eine Regenerierungseinrichtung (15, 16) zum Entfernen der in dem Filter angesammelten, aus Teilchen bestehenden Materie, die durch das von der Einrichtung zum Abschätzen der Menge an aus Teilchen bestehenden Materie ausgegebene Signal betätigt wird,

**dadurch gekennzeichnet, daß**

die Einrichtung zum Abschätzen der angesammelten Menge an aus Teilchen bestehender Materie das Gewicht derselben bestimmt,

eine Maschinenbetriebsdetektionseinrichtung vorgesehen ist, und die Einrichtung zum Abschätzen des Gewichts der angesammelten, aus Teilchen bestehenden Materie versehen ist mit

einer Einrichtung zum Speichern physikalischer Faktoren, in der die physikalischen Faktoren, die mit dem Betrieb des Verbrennungsmotors in bezug stehen, und die Intensität der elektromagnetischen Welle in dem Raum, in dem der Filter aufgenommen ist, als Variablen definiert werden, und

einer Einrichtung zum Ableiten des Gewichts der angesammelten, aus Teilchen bestehenden Materie, durch die das Signal des physikalischen Faktors, der mit dem Betrieb des Verbrennungsmotors in Beziehung steht, und das Intensitätssignal der elektromagnetischen Welle, das durch die Detektionseinrichtung für elektromagnetische Wellen detektiert worden ist, mit einer Speichereinrichtung für das Gewicht der gesammelten, aus Teilchen bestehenden Materie verglichen werden.

2.  Eine Abgasreinigungsvorrichtung nach Anspruch 1, in welcher

die Maschinenbetriebsdetektionseinrichtung versehen ist mit wenigstens einer Einrichtung aus der Gruppe der Einrichtungen, die besteht aus

einer Detektionseinrichtung für elektrische Signale zum Detektieren des Signals, das von den elektrischen Komponenten ausgegeben wird, die mit dem Betrieb des Verbrennungsmotors in Beziehung stehen,

einer Ansaugluftvolumendetektionseinrichtung (79) zum Detektieren des Volumens von Ansaugluft, einer Abgasvolumendetektionseinrichtung zum Detektieren des Volumens des Abgases, das von dem Verbrennungsmotor abgegeben wird, und

einer Abgastemperaturdetektionseinrichtung (23).

3.  Eine Abgasreinigungsvorrichtung umfassend:

einen Filter (54), der aus Teilchen bestehende Materie, die im Abgas eines Verbrennungsmotors (51) enthalten ist, sammelt,

eine Zuführeinrichtung für elektromagnetische Wellen (59) zum Zuführen einer elektromagnetischen Welle in einen Raum (53), in dem der Filter (54) aufgenommen ist,

eine Detektionseinrichtung für elektromagnetische Wellen (67), die an die elektromagnetische Welle gekoppelt ist, die in dem Raum (53), in dem der Filter aufgenommen ist, erzeugt wird, und zum Detektieren der Intensität der elektromagnetischen Welle, und

eine Regenerierungseinrichtung (72, 74, 75) zum Entfernen der in dem Filter gesammelten, aus Teilchen bestehenden Materie, welche durch das von der Detektionseinrichtung für elektromagnetische Wellen ausgegebene Signal betätigbar ist,

**dadurch gekennzeichnet, daß**

die Abgasreinigungsvorrichtung versehen ist mit:

einer Gasflußdetektionseinrichtung zum Detektieren des Abgasflusses in dem Filter,

einer Zeitintegrationseinrichtung (82) zum Integrieren der Zeitintervalle, in denen Abgas entsprechend des von der Gasflußdetektionseinrichtung ausgegebenen detektierten Signals in dem Filter strömt,

einer Gewichtsspeichereinrichtung für angesammelte, aus Teilchen bestehende Materie (85) zum Bestimmen der Gewichte der in dem Filter (54) angesammelten, aus Teilchen bestehenden Materie und zum Definieren des integrierten Zeitwerts und der Intensität der detektierten elektromagnetischen Welle als Variablen unter Verwendung eines selben oder ähnlichen Verbrennungsmotors, eines Filters, einer Flußdetektionseinrichtung, einer Zeitintegrationseinrichtung, einer Zuführeinrichtung für elektromagnetische Wellen und einer Detektionseinrichtung für elektromagnetische Wellen, und

einer Gewichtsableiteinrichtung für angesammelte, aus Teilchen bestehende Materie zum Ableiten des Gewichts der durch den Filter angesammelten, aus Teilchen bestehende Materie durch Vergleichen des von der Zeitintegrationseinrichtung gezählten Zeitwerts und des Werts, der durch die Detektionseinrichtung für elektromagnetische Wellen detektiert worden ist, mit den Werten, die in der Gewichtsspeichereinrichtung für angesammelte, aus Teilchen bestehende Materie (86) gespeichert ist.

4. Eine Abgasreinigungsvorrichtung nach Anspruch 3, weiter umfassend:

eine Maschinenlastdedektionseinrichtung (79) zum Detektieren der Last eines Verbrennungsmotors,

eine zweite Zeitintegrationseinrichtung (83) zum Integrieren der Zeitintervalle, die die Bedingungen, daß das Abgas gemäß einem entsprechend detektierten Signal, das von der Gasflußdetektionseinrichtung ausgegeben worden ist, im Filter fließt, und daß eine Last des Verbrennungsmotors entsprechend eines Signals, das von der Maschinenlastdetektionseinrichtung ausgegeben wird, niedrig gehalten ist, erfüllen,

eine Zeitsubtraktionseinrichtung (84) zum Subtrahieren der Zählwerte der zweiten Zeitintegrationseinrichtung (83) von den Werten der ersten Zeitintegrationseinrichtung (82),

in welcher die Gewichtspeichereinrichtung für angesammelte, aus Teilchen bestehende Materie die Gewichte der durch den Filter angesammelten, aus Teilchen bestehenden Materie bestimmt und das von der Subtraktionseinrichtung ausgegebene Ergebnis, die integrierten Zeitwerte und die Intensität der detektierten elektromagnetischen Welle als Variablen definiert, unter Verwendung eines selben oder ähnlichen Verbrennungsmotors, eines Filters, einer Flußdetektionseinrichtung, einer Zeitintegrationseinrichtung, einer Zuführeinrichtung für elektromagnetische Wellen und einer Detektionseinrichtung für elektromagnetische Wellen.

5. Eine Abgasreinigungsvorrichtung nach Anspruch 4, weiter versehen mit:

einer Multiplikationseinrichtung (86) zum Multiplizieren eines vorbestimmten Werts mit dem Zeitwert, der durch die zweite Zeitintegrationseinrichtung bestimmt wird, und

eine Gewichtsaddiereinrichtung für angesammelte, aus Teilchen bestehende Materie (87) zum Ableiten des Gewichts der durch den Filter angesammelten, aus Teilchen bestehenden Materie durch Addieren des durch die Gewichtsableiteinrichtung für angesammelte, aus Teilchen bestehende Materie abgeleiteten Gewichtswerts der angesammelten, aus Teilchen bestehenden Materie zum Zählwert, der durch die Multiplikationseinrichtung erhalten worden ist.

6. Eine Abgasreinigungsvorrichtung nach Anspruch 3 oder 4, in welcher
die Gewichtsspeichereinrichtung für angesammelte, aus Teilchen bestehende Materie (85) aufgebaut ist aus Gewichtskurven für angesammelte, aus Teilchen bestehende Materie, von denen jede funktionalisiert ist, oder Gewichtskurven für angesammelte, aus Teilchen bestehende Materie, die dadurch in eine Matrixform transformiert worden sind, daß erwünschte Gewichte angesammelter, aus Teilchen bestehender Materie in der zeitabhängigen Kenndatenkurve zugewiesen worden sind, und Gewichtskurven für angesammelte, aus Teilchen bestehende Materie, die alle Punkte der gleichen Gewichte angesammelter, aus Teilchen bestehender Materie verbinden, welche erhalten werden durch Zeichnen aller Gewichtskurven für angesammelte, aus Teilchen bestehende Materie durch Verbinden der Punkte, die gleiche Gewichte für angesammelte, aus Teilchen bestehende Materie zeigen, und durch Einstellen der integrierten Zeitwerte und der detektierten Werte der elektromagnetischen Welle als Variablen, basierend auf der zeitabhängigen Kenndatenkurve des detektierten Werts für die elektromagnetische Welle, erhalten durch Betreiben des Verbrennungsmotors unter wenigstens zwei verschiedenen Betriebsbedingungen, welche die Umdrehung und die Last des Verbrennungsmotors definieren, und durch Ermitteln des Gewichts der angesammelten, aus Teilchen bestehenden Materie nach dem Motorbetrieb.

7. Eine Abgasreinigungsvorrichtung nach Anspruch 6, in welcher

die Matrix aus Reihen integrierter Zeitwerte und die Spalten aus detektierten Werten für die elektromagnetische Welle bestehen, und

die Intervalle der Reihen in Bereichen mit großem Integrationszeitwert größer sind als die Intervalle der Reihen in Bereichen mit kleinem Integrationszeitwert und/oder die Intervalle der Spalten in einem Bereich mit großem detektiertem Wert der elektromagnetischen Welle größer sind als die Intervalle der Spalten in Bereichen mit kleinen detektierten Werten für die elektromagnetische Welle.

8. Eine Abgasreinigungsvorrichtung nach Anspruch 3 oder 4, in welcher

die Gasflußdetektionseinrichtung versehen ist mit wenigstens einer der Einrichtungen aus der Gruppe, die besteht aus

einer elektrischen Signaldetektionseinrichtung zum Detektieren der Änderungen in elektrischen Signalen der elektrischen Komponenten, die in bezug auf den Betrieb des Verbrennungsmotors erzeugt werden,

einer Einlaßluftvolumendetektionseinrichtung zum Detektieren des Volumens des Abgases, das von dem Verbrennungsmotor abgegeben wird, und

wenigstens einer Abgastemperaturdetektionseinrichtung (78) zum Detektieren der Temperatur des Abgases.

9. Eine Abgasreinigungsvorrichtung nach Anspruch 3 oder 4, in welcher
die Detektionseinrichtung für elektromagnetische Wellen (67) an einer vorbestimmten Position an einer Behäterwand, die dem in einem Behälter aufgenommen Filter (54) gegenüberliegt, angeordnet ist.

10. Eine Abgasreinigungsvorrichtung nach Anspruch 4, in welcher
die Maschinenlastdetektionseinrichtung (79) mit einer mechanischen Signaldetektionseinrichtung zum Detektieren der mechanischen Änderungen der mechanischen Komponenten in bezug auf den Betrieb des Verbrennungsmotors und/oder einer Abgasdetektionseinrichtung zum Detektieren der Temperatur des Abgases des Verbrennungsmotors versehen ist.

**Revendications**

1. Purificateur de gaz d'échappement, comprenant :

un filtre (4) recueillant la matière en particules contenue dans le gaz d'échappement d'un moteur à combustion interne (1),
des moyens de délivrance (5) d'onde électromagnétique pour délivrer une onde électromagnétique dans un espace (3) dans lequel ledit filtre est logé,
des moyens de détection (18) d'onde électromagnétique reliés à l'onde électromagnétique produite dans ledit espace (3) dans lequel ledit filtre (4) est logé, pour détecter l'intensité de l'onde électromagnétique,
des moyens pour estimer la quantité de matière en particules recueillie par ledit filtre à partir du signal obtenu par lesdits moyens de détection d'onde électromagnétique,
des moyens de régénération (15, 16) pour retirer la matière en particules recueillie par ledit filtre, mis en marche par le signal de sortie provenant desdits moyens pour estimer la quantité de matière en particules,

**caractérisé en ce que,**

lesdits moyens pour estimer la quantité de matière en particules recueillie estiment le poids de cette dernière,
des moyens de détection du fonctionnement du moteur sont prévus, et
lesdits moyens pour estimer le poids de la matière en particules recueillie sont munis :
de moyens pour mémoriser des facteurs physiques, dans lesquels les facteurs physiques, se rapportant au fonctionnement dudit moteur à combustion interne et à l'intensité de l'onde électromagnétique à l'intérieur dudit espace logeant ledit filtre, sont définis comme des variables, et
de moyens d'obtention du poids de matière en particules recueillie par lesquels le signal du facteur physique se rapportant au fonctionnement dudit moteur à combustion interne et le signal de l'intensité de l'onde électromagnétique détecté par lesdits moyens de détection d'onde électromagnétique sont collationnés avec des moyens de mémoire dudit poids de la matière en particules recueillie.

2. Purificateur de gaz d'échappement, selon la revendication 1, dans lequel

lesdits moyens de détection de fonctionnement du moteur sont munis d'au moins l'un des moyens suivants :
de moyens de détection de signal électrique pour détecter le signal de sortie provenant de composants électriques se rapportant au fonctionnement d'un moteur à combustion interne,
de moyens de détection (79) de volume d'air d'admission pour détecter le volume d'air d'admission, de moyens de détection de volume de gaz d'échappement pour détecter le volume de gaz d'échappement sortant dudit moteur à combustion interne, et
de moyens de détection de la température du gaz d'échappement (23).

3. Purificateur de gaz d'échappement, comprenant :

   un filtre (54) recueillant la matière en particules contenue dans le gaz d'échappement d'un moteur à combustion interne (51),
   des moyens de délivrance (59) d'onde électromagnétique pour délivrer une onde électromagnétique dans un espace (53) dans lequel ledit filtre (54) est logé,
   des moyens de détection (67) d'onde électromagnétique reliés à l'onde électromagnétique produite dans ledit espace (53) logeant ledit filtre et détectant l'intensité de l'onde électromagnétique, et
   des moyens de régénération (72, 74, 75) pour retirer la matière en particules recueillie dans ledit filtre, mis en marche par le signal de sortie provenant desdits moyens de détection d'onde électromagnétique,

   **caractérisé en ce que**

   ledit purificateur de gaz d'échappement est muni :
   de moyens de détection d'écoulement de gaz pour détecter l'écoulement de gaz d'échappement dans ledit filtre,
   de moyens d'intégration de temps (82) pour intégrer les périodes pendant lesquelles le gaz d'échappement s'écoule dans ledit filtre selon le signal détecté de sortie provenant desdits moyens de détection d'écoulement de gaz,
   de moyens de mémoire (85) des poids de matière en particule recueillie pour déterminer les poids de la matière en particules recueillie par ledit filtre (54) et pour définir la valeur de temps intégré et l'intensité de l'onde électromagnétique détectée en tant que variables en utilisant un moteur à combustion interne, un filtre, des moyens de détection d'écoulement, des moyens d'intégration de temps, des moyens de délivrance d'onde électromagnétique, et des moyens de détection d'onde électromagnétique, identiques ou similaires, et
   de moyens d'obtention du poids de matière en particules recueillie pour obtenir le poids de la matière en particules recueillie par ledit filtre en collationnant la valeur de temps comptée par lesdits moyens d'intégration de temps et la valeur détectée par lesdits moyens de détection d'onde électromagnétique avec les valeurs stockées dans lesdits moyens de mémoire (86) des poids de matière en particules recueillie.

4. Purificateur de gaz d'échappement, selon la revendication 3, comprenant de plus :

   des moyens de détection (79) de charge de moteur pour détecter la charge dudit moteur à combustion interne,
   des seconds moyens d'intégration de temps (83) pour intégrer les périodes qui satisfont aux deux conditions selon lesquelles ledit gaz d'échappement s'écoule dans ledit filtre selon un signal de sortie détecté respectif provenant desdits moyens de détection d'écoulement de gaz et une charge dudit moteur à combustion interne est conservée basse selon un signal de sortie provenant desdits moyens de détection de charge de moteur,
   des moyens de soustraction de temps (84) pour soustraire les comptages desdits seconds moyens d'intégration de temps (83) desdits comptages desdits premiers moyens d'intégration de temps (82),
   dans lequel lesdits moyens de mémoire des poids de matière en particules recueillie déterminent les poids de la matière en particules recueillie par ledit filtre et définissent le résultat de sortie à partir desdits moyens de soustraction de temps, les valeurs de temps intégré et l'intensité de l'onde électromagnétique détectée en tant que variables en utilisant un moteur à combustion interne, un filtre, des moyens de détection d'écoulement, des moyens d'intégration de temps, des moyens de délivrance d'onde électromagnétique, et des moyens de détection d'onde électromagnétique, identiques ou similaires.

5. Purificateur de gaz d'échappement, selon la revendication 4, comprenant de plus :

   des moyens de multiplication (86) pour multiplier une valeur prédéterminée avec la valeur de temps déterminée par lesdits seconds moyens d'intégration de temps, et
   des moyens d'addition (87) de poids de matière en particules recueillie pour obtenir les poids de la matière en particules recueillie par ledit filtre en ajoutant la valeur du poids de matière en particules recueillie obtenue par lesdits moyens d'obtention de poids de matière en particules recueillie au comptage obtenu par lesdits moyens de multiplication.

6. Purificateur de gaz d'échappement, selon la revendication 3 ou 4, dans lequel :
   lesdits moyens de mémoire (85) des poids de matière en particules recueillie sont constitués de courbes de poids de matière en particules recueillie, chacune d'elles étant fonctionnalisée, ou de courbes de poids de matière en particules recueillie transformées en une forme de matrice en attribuant des poids souhaités de matière en particules recueillie sur ladite courbe caractéristique en fonction du temps et de courbes de poids de matière en particules recueillie reliant chacun des points sur les poids égaux de matière en particules recueillie, obtenus en traçant la totalité desdites courbes de poids de matière en particules recueillie en reliant les points montrant des poids égaux de matière en particules recueillie, et en fixant les valeurs de temps intégré et les valeurs d'onde électromagnétique détectée en tant que variables sur la base de la courbe caractéristique en fonction du temps de la valeur d'onde électromagnétique détectée obtenue en faisant fonctionner ledit moteur à combustion interne sous au moins deux conditions de fonctionnement différentes définissant la rotation et la charge dudit moteur à combustion interne et le poids de matière en particules recueillie déterminé après fonctionnement du moteur.

7.  Purificateur de gaz d'échappement, selon la revendication 6, dans lequel :

ladite matrice est constituée de rangées des valeurs de temps intégré et de colonnes des valeurs d'onde électromagnétique détectée, et
les intervalles desdites rangées au niveau des zones des valeurs de temps intégré élevées sont plus grands que les intervalles desdites rangées au niveau des zones de valeurs de temps intégré faibles et/ou les intervalles desdites colonnes au niveau des zones de valeurs d'onde électromagnétique détectée élevées sont plus grands que les intervalles desdites colonnes au niveau des zones des valeurs d'onde électromagnétique détectée faibles.

8.  Purificateur de gaz d'échappement, selon la revendication 3 ou 4, dans lequel :

lesdits moyens de détection d'écoulement de gaz sont munis d'au moins :
des moyens de détection de signal électrique pour détecter les modifications de signaux électriques de composants électriques, produits en relation avec le fonctionnement du moteur à combustion interne,
des moyens de détection de volume d'air d'admission pour détecter le volume de gaz d'échappement sortant dudit moteur à combustion interne, et
d'au moins un moyen de détection (78) de température de gaz d'échappement pour détecter la température du gaz d'échappement.

9.  Purificateur de gaz d'échappement, selon la revendication 3 ou 4, dans lequel :
lesdits moyens de détection (67) d'onde électromagnétique sont disposés à une position prédéterminée sur une paroi de conteneur faisant face audit filtre (54) logé dans un conteneur.

10. Purificateur de gaz d'échappement, selon la revendication 4, dans lequel :
lesdits moyens de détection (79) de charge de moteur sont munis de moyens de détection de signal mécanique pour détecter les modifications mécaniques de composants mécaniques se rapportant au fonctionnement du moteur à combustion interne et/ou de moyens de détection de gaz d'échappement pour détecter la température du gaz d'échappement du moteur à combustion interne.

Fig. 1

Fig. 2

Fig. 3

Fig. 4

Fig. 5